# EUROPÄISCHE PATENTSCHRIFT

(11) **EP 2 694 846 B1**
(45) Veröffentlichungstag und Bekanntmachung des Hinweises auf die Patenterteilung: **02.05.2018**
(21) Anmeldenummer: 12709587.5
(22) Anmeldetag: 13.03.2012
(51) Int. Cl.: F16H 61/12, F16H 61/28, F16H 63/18, F16D 21/00

(54) **VORRICHTUNG ZUM VERÄNDERN EINES BETRIEBSZUSTANDES WENIGSTENS EINES SCHALTELEMENTES**
DEVICE FOR CHANGING AN OPERATING STATE OF AT LEAST ONE SWITCH ELEMENT
PROCÉDÉ PERMETTANT DE CHANGER L'ÉTAT DE FONCTIONNEMENT D'AU MOINS UN ÉLÉMENT DE COMMUTATION

(30) Priorität: 07.04.2011 DE 102011006969
(43) Veröffentlichungstag der Anmeldung: 12.02.2014
(73) Patentinhaber: ZF Friedrichshafen AG, 88046 Friedrichshafen (DE)
(72) Erfinder: ABELE, Marc, 38066 Riva del Garda (TN) (IT); RIEGER, Wolfgang, 88048 Friedrichshafen (DE); REISCH, Matthias, 88214 Ravensburg (DE); JANIGA, Pavel, 32322 Plzen (CZ)
(86) Internationale Anmeldenummer: PCT/EP2012/054316
(87) Internationale Veröffentlichungsnummer: WO 2012/136447

(56) Entgegenhaltungen:
- DE-A1-102006 008 226
- DE-A1-102008 000 645
- US-A- 5 996 754
- US-A1- 2009 127 063
- US-A1- 2010 187 067

## Beschreibung

Die Erfindung betrifft eine Vorrichtung zum Verändern eines Betriebszustandes eines Schaltelementes gemäß der im Oberbegriff des Patentanspruches 1 näher definierten Art.

Aus der Praxis bekannte Getriebeeinrichtungen sind üblicherweise mit form- und reibschlüssigen Schaltelementen ausgeführt, über die verschiedene Funktionen der Getriebeeinrichtungen betriebszustandsabhängig zur Verfügung gestellt werden. So sind beispielsweise bei Doppelkupplungsgetrieben getriebeeingangsseitig zwei als reibschlüssige Kupplungen ausgeführte Schaltelemente vorgesehen, über die jeweils ein für eine Zuschaltung vorbereitetes Teilgetriebe in den Kraftfluss eines Fahrzeugantriebsstranges zuschaltbar ist oder bei entsprechend angefordertem Übersetzungswechsel aus dem Kraftfluss abgeschaltet wird. Des Weiteren sind auch als Bandbremsen ausgeführte Schaltelemente bekannt, über welche beispielsweise Drehzahlen von Wellen der Getriebeeinrichtungen in einem für einen Schaltvorgang erforderlichen Umfang jeweils an die Synchrondrehzahl einer einzulegenden Übersetzung in einer Getriebeeinrichtung angepasst werden.

Hierfür ist jeweils eine Übertragungsfähigkeit derartiger Schaltelemente betriebszustandsabhängig mit hoher Stelldynamik zu verändern. Dabei werden oftmals als elektromechanische Antriebsmaschinen ausgeführte Antriebseinrichtungen für die Betätigung der Schaltelemente vorgesehen, die mit einer elektrischen Antriebsmaschine und einer Antriebswandlereinrichtung ausgebildet sind, wobei die Antriebswandlereinrichtung zwischen der Antriebsmaschine und dem Schaltelement angeordnet ist. Im Bereich der Antriebswandlereinrichtung wird eine rotatorische Antriebsbewegung der Antriebsmaschine in eine translatorische Betätigungsbewegung des Schaltelementes umgewandelt.

In Abhängigkeit des jeweils vorliegenden Anwendungsfalles ist im Bereich der Antriebswandlereinrichtung eine Übersetzungsstufe vorgesehen, um den rotatorischen Antrieb der Antriebsmaschine bzw. das von der Antriebsmaschine zur Verfügung gestellte Antriebsmoment anwendungsfallabhängig auf ein erforderliches Niveau transformieren zu können. Dabei werden als Übersetzungsstufen Stirnradstufen, Schneckengetriebe, Kurvenscheiben, Spindelsysteme oder Kugel-Rampen-Systeme verwendet.

Durch anwendungsfallabhängige Auslegung der Antriebswandlereinrichtung und die daraus resultierende Übersetzung zwischen der Antriebsmaschine und einer Anpressscheibe des von der Antriebsmaschine zu betätigenden Schaltelementes ist die für die gewünschte Funktionsweise des Schaltelementes erforderliche Höhe der in Schließrichtung des Schaltelementes an diesem anzulegenden Betätigungskraft und das wiederum damit korrespondierende Antriebsmoment der Antriebsmaschine sowie eine daraus resultierende Stelldynamik variierbar bzw. einstellbar.

Die Auslegung der Leistungsfähigkeit der Antriebsmaschine erfolgt in Abhängigkeit der gewünschten Stellzeit bzw. Schließzeit des Schaltelementes, einem Lüftspiel im Bereich eines reibschlüssigen Schaltelementes, der Bauteilelastizitäten des reibschlüssigen Schaltelementes, der Bauteilelastizitäten von weiteren im Kraftfluss vorhandenen Bauelementen, einer Massenträgheit der Antriebsmaschine sowie der Höhe der Übersetzung zwischen der Antriebsmaschine und dem von der Antriebsmaschine zu betätigenden Schaltelement. Zusätzlich wird bei der Auslegung der Antriebsmaschinen und der damit kombinierten Antriebswandlereinrichtungen auch ein über der Betriebsdauer eines Schaltelementes auftretender Verschleiß berücksichtigt, da eine verschleißbedingte Veränderung des Lüftspiels zu einer Veränderung des Stellweges führt.

Ist beispielsweise eine Übertragungsfähigkeit eines reibschlüssigen Schaltelementes in Abhängigkeit einer entsprechenden Anforderung während eines Betriebes einer Getriebeeinrichtung auf einen bestimmten vorzugsweise von einem Fahrzeugrechner vorgegebenen Drehmomentwert einzustellen und anschließend für längere Betriebszeiten auf diesem Niveau zu halten, ist seitens der Antriebsmaschine dauerhaft eine Haltekraft zur Verfügung zu stellen. Bei der Ausführung der Antriebsmaschine als Elektromotor ist dieser zum Halten des Niveaus der Übertragungsfähigkeit des reibschlüssigen Schaltelementes dauerhaft mit einem hierzu äquivalenten Stromwert zu bestromen. Eine derartige Dauerstromentnahme ist jedoch unerwünscht, da sie einerseits eine Belastung der elektrischen und elektronischen Komponenten verursacht und andererseits einen Kraftstoffverbrauch eines Fahrzeuges erhöht.

Um während einer vorbeschriebenen Haltephase der Übertragungsfähigkeit eines reibschlüssigen Schaltelementes den Strombedarf für den Betrieb eines Elektromotors zu reduzieren, werden bei bekannten Systemen verschiedene Maßnahmen vorgesehen.

So sind beispielsweise jeweils im Übersetzungspfad zwischen einem Elektromotor und des reibschlüssigen Schaltelementes Getriebe vorgesehen, die mit einer Selbsthemmung ausgeführt sind. Über die Selbsthemmung des zusätzlichen Getriebes wird erreicht, dass die Übertragungsfähigkeit des reibschlüssigen Schaltelementes bei geringen Betätigungsströmen des Elektromotors auf einem gewünschten Niveau haltbar ist und eine Veränderung der Übertragungsfähigkeit des reibschlüssigen Schaltelementes nur bei höheren Antriebsmomenten der elektrischen Maschine erfolgt.

Betätigungssysteme mit Selbsthemmung erfordern aufgrund des im Bereich des mit Selbsthemmung ausgeführten Getriebes vorliegenden niedrigen Verzahnungswirkungsgrades über den gesamten Betriebsbereich eines Schaltelementes nachteilhafterweise ein höheres antriebsmaschinenseitiges Drehmoment als Betätigungssysteme ohne Selbsthemmung. Höhere Betätigungskräfte sind jedoch nur mit Antriebsmaschinen zur Verfügung stellbar, die eine entsprechende Leistungsfähigkeit aufweisen. Elektromotoren mit höherer Leistungsfähigkeit benötigen einen größeren Bauraum und sind durch eine höhere Leistungsaufnahme gekennzeichnet.

Um ein Betätigungssystem mit Selbsthemmung mit geringem Bauraumbedarf ausführen zu können, besteht die Möglichkeit, eine Übersetzung zwischen der Antriebsmaschine und dem Schaltelement entsprechend zu erhöhen, wodurch jedoch eine Stelldynamik in nicht unerheblichem Umfang beeinträchtigt wird. Des Weiteren stellt eine üblicherweise rechtwinklige Anordnung eines Schnecken- oder Schraubradsatzes eine bauraumungünstige Ausführung dar.

Alternativ hierzu ist es bekannt, im Bereich des Elektromotors oder an einer anderen Stelle im Kraftpfad des Stellsystems zwischen der elektrischen Maschine und der reibschlüssigen Kupplung eine elektromagnetische Bremse vorzusehen, die in Betriebsphasen des reibschlüssigen Schaltelementes, während welchen die Übertragungsfähigkeit im Wesentlichen konstant zu halten ist, in geschlossenem Betriebszustand eine Veränderung der Übertragungsfähigkeit des Schaltelementes verhindert. Damit ist der Betätigungsstrom des Elektromotors in geschlossenem Betriebszustand der elektromagnetischen Bremse unter Umständen in erheblichem Umfang reduzierbar.

Der Einsatz elektromagnetischer Haltebremsen verursacht jedoch zusätzlichen Steuer- und Regelaufwand und erfordert entsprechende Hardware für die Betätigung der elektromagnetischen Bremse, wodurch höhere Fertigungs- und Entwicklungskosten entstehen. Zusätzlich ist der über die elektromagnetische Bremse zur Verfügung stellbare Halteeffekt bei häufigen Anforderungen für einen Betriebszustandswechsel des zu betätigenden reibschlüssigen Schaltelementes aufgrund der systemimmanenten Stelldynamik der elektromagnetischen Haltebremsen nicht in gewünschtem Umfang nutzbar, womit ein für den Betrieb des Elektromotors erforderlicher Strombedarf nicht in gewünschtem Umfang reduzierbar ist.

Des Weiteren ist es bekannt, elektromechanisch betätigbaren Anfahrkupplungen von Getriebeeinrichtungen so genannte Kompensationsmechaniken zuzuordnen, die einen Stellvorgang reibschlüssiger Kupplungen unterstützen und mit welchen ein Strombedarf eines Elektromotors mit geringem Steuer- und Regelaufwand auf kostengünstige Art und Weise reduzierbar ist. Die Kompensationsmechaniken umfassen üblicherweise ein während einer Montage vorgespanntes Federsystem, das während der Betätigung eines Schaltelementes in Schließrichtung des Schaltelementes wirkt und das ihre gespeicherte Federkraft wegabhängig abbaut.

Stellsysteme für Schaltelemente, welche mit Kompensationsmechaniken bzw. Kompensationseinrichtungen ausgeführt sind, bieten im Vergleich zu Systemen mit einer Selbsthemmung oder einer elektromagnetischen Bremse den Vorteil, dass bereits während der Montage eine Kraft gespeichert wird, die der in Betätigungsrichtung (also in Öffnungsrichtung bei im Grundzustand geöffneten Schaltelementen und in Schließrichtung bei im Grundzustand geschlossenen Schaltelementen) des Schaltelementes wirkenden Betätigungskraft des Schaltelementes in Abhängigkeit des axialen Betätigungsweges des Schaltelementes entgegensteht und der Elektromotor in Abhängigkeit der Auslegung des Betätigungssystems für das Schaltelement im Wesentlichen nur noch eine geringe Restkraft während der Betätigung des Schaltelementes überwinden muss. Ist die über die Kompensationsmechanik zur Verfügung gestellte Kompensationskraft geringer als die während der Betätigung im Bereich des Schaltelementes auftretende und in Betätigungsrichtung des Schaltelementes wirkende Gegenkraft, geht das Schaltelement in stromlosem Betriebszustand des Elektromotors anforderungsgemäß in seinen Grundzustand über. Im Betrieb jeweils im Bereich der Kompensationseinrichtung oder im Bereich des Schaltelementes gespeicherte Federenergien, die aus Bauteilelastizitäten der Kompensationseinrichtung und des Schaltelementes resultieren, werden zwischen der Kompensationseinrichtung und dem Schaltelement ausgetauscht.

Bei den bekannten Kompensationseinrichtungen ist jeweils eine Kompensationsfeder über zusätzliche Hebelelemente mit einer Drehscheibe wirkverbunden, die jedoch einen konstruktiven Aufwand und einen Bauraumbedarf der mit Kompensationseinrichtungen ausgeführten Betätigungssysteme in unerwünschtem Umfang erhöhen. Auch sind die bekannten Kompensationseinrichtungen auf bestimmte Kennlinien festgelegt. Es wird also für eine bestimmte Position des Schaltelements eine durch die Konstruktion vorgegebene Kraft bewirkt.

Aus einer weiteren Veröffentlichung US 5,996,754 ist ein elektromechanischer Kupplungsaktuator zum Öffnen einer Kupplung für ein Getriebe bekannt. Dieser Kupplungsaktuator enthält eine Hilfsfeder zur Reduktion des Motormoments, welches zur Betätigung des Kupplungsaktuators erforderlich ist. Außerdem enthält der Kupplungsaktuator eine Selbstjustierungseinheit zum Verschleißausgleich.

In einem anderen Dokument US 2009/0127063 A1 ist eine Kupplungsantriebsvorrichtung beschrieben, welche einen Aktuator zur Erzeugung einer Stellkraft für die Kupplung enthält. Ferner ist ein erster Rotationskörper, ein Mechanismus zur Übertragung der Stellkraft des Aktuators an die Kupplung und eine Hilfsfedereinheit beschrieben, dessen eines Ende an dem Rotationskörper anliegt sowie ein Widerlager in welchem der Rotationskörper an der Hilfsfedereinheit anliegt. Dabei ist das Widerlager derart konfiguriert, dass eine Druckkraft der Hilfsfeder zumindest in einer Position in einem Toleranzbereich, in dem die Kupplung nicht ausgekuppelt ist, nicht in Drehrichtung des Rotationskörpers wirkt.

Aus der Veröffentlichung US 2010/0187067 A1 ist ein weiterer Stellmechanismus zum Ein- und Ausrücken einer Trennkupplung für ein Einfach- oder Doppelkupplungsgetriebe bekannt mit einem Stellantrieb, einem Kurvensegment, das um ein erstes gehäusefestes Lager drehbar ist und das durch den Stellantrieb in eine Einrück- oder Ausrückdrehrichtung drehbar ist; mit einer Einrückgabel die um ein zweites gehäusefestes Lager drehbar ist und wobei die Gabel über einen Kurvenfolger an das Kurvensegment gekoppelt ist und auf einer gegenüberliegenden Seite der Gabel derart an die Trennkupplung koppelbar ist, dass die Trennkupplung bei einer Drehung des Kurvensegments in die Einrückdrehrichtung geschlossen wird und dass die Trennkupplung bei einer Drehung des Kurvensegments in die Ausrückdrehrichtung geöffnet wird.

Der vorliegenden Erfindung liegt daher die Aufgabe zugrunde, eine mit geringem Steuer- und Regelaufwand und hohem Wirkungsgrad betreibbare sowie bauraumgünstige Vorrichtung zum Verändern eines Betriebszustandes eines Schaltelementes zur Verfügung zu stellen. Eine weitere mögliche Aufgabe der Erfindung ist es, eine Kompensationseinrichtung bereitzustellen, welche einen freier gestaltbaren Zusammenhang zwischen dem Zustand des Schaltelements und der Kraft, welche durch die Kompensationseinrichtung eingeleitet wird, zulässt.

Erfindungsgemäß wird diese Aufgabe mit einer Vorrichtung mit den Merkmalen des Patentanspruches 1 gelöst.

Die erfindungsgemäße Vorrichtung zum Verändern eines Betriebszustandes wenigstens eines Schaltelementes mit zwei Schaltelementhälften, die zur Verbindung wenigstens zweier Bauteile miteinander in Wirkverbindung bringbar sind oder zum Trennen der Verbindung zwischen den Bauteilen außer Eingriff führbar sind, umfasst eine Einrichtung, über die eine Kraft in eine Betätigungskette zwischen einer Antriebseinrichtung, mittels der eine Betätigungskraft für das Schaltelement zur Verfügung stellbar ist, und dem Schaltelement einleitbar ist.

Dabei ist die Kraft der Einrichtung im Bereich eines mit einer Steuerkurve in Wirkverbindung stehenden Koppelbereiches der Einrichtung in die Betätigungskette zwischen der Antriebseinrichtung und dem Schaltelement einleitbar, wobei der Koppelbereich in Abhängigkeit eines rotatorischen Antriebes der Antriebseinrichtung entlang eines Verlaufes der Steuerkurve mit der Steuerkurve in Wirkverbindung steht und die über die Einrichtung einleitbare Kraft zumindest in Abhängigkeit des Verlaufs der Steuerkurve mit geringem Steuer- und Regelaufwand betriebszustandsabhängig variiert.

Um zwei in axialer Richtung miteinander in Eingriff bringbare Schaltelementhälften eines form- und/oder reibschlüssigen Schaltelementes über den rotatorischen Antrieb der Antriebseinrichtung miteinander in Eingriff oder aus dem Eingriff miteinander führen zu können, ist der rotatorische Antrieb der Antriebseinrichtung im Bereich einer Antriebswandlereinrichtung in eine translatorische Betätigungsbewegung des Schaltelementes umwandelbar.

Außerdem weist die Antriebswandlereinrichtung zwei miteinander in Wirkverbindung stehende Baugruppen auf, wobei eine der Baugruppen verdrehbar sowie in axialer Richtung verstellbar ausgeführt ist und mit der Antriebseinrichtung verbunden ist, während die andere Baugruppe in axialer Richtung festgelegt und verdrehfest ist, ist die axiale Betätigungsbewegung für das Schaltelement im Bereich der verdrehbaren Baugruppe in Abhängigkeit der Rotation der verdrehbaren Baugruppe zur Verfügung stellbar.

Die erfindungsgemäße Vorrichtung weist im Vergleich zu aus der Praxis bekannten und mit Kompensationseinrichtungen ausgebildeten Betätigungssystemen einen geringeren Bauraumbedarf auf, da die von der Einrichtung zur Verfügung stehende Kraft ohne zusätzliche Hebelelemente bauraumgünstig entlang des Verlaufes der Steuerkurve mit geringen Verlustleistungen und somit hohem Wirkungsgrad bei gleichzeitig hoher Stelldynamik in die Betätigungskette zwischen der Antriebseinrichtung und dem Schaltelement einleitbar ist. Außerdem erlaubt die Vorrichtung anhand der Ausgestaltung der Steuerkurve die einleitbare Kraft betriebszustandsabhängig zu variieren.

Bei einer die antriebseinrichtungsseitige Betätigung des Schaltelementes unterstützenden Ausführungsform der erfindungsgemäßen Vorrichtung weist der Verlauf der Steuerkurve einen Bereich auf, in dem die über die Einrichtung zur Verfügung stehende Kraft additiv zu einer entgegen der Betätigungsrichtung des Schaltelementes über die Antriebseinrichtung zur Verfügung stehenden Betätigungskraft der Antriebseinrichtung wirkt.

Um beispielsweise eine Begrenzung der Betätigung des Schaltelementes in und/ oder entgegen der Betätigungsrichtung zur Verfügung stellen zu können, weist der Verlauf der Steuerkurve bei einer weiteren vorteilhaften Ausführungsform der erfindungsgemäßen Vorrichtung einen Bereich auf, in dem die über die Einrichtung zur Verfügung stehende Kraft einer in oder entgegen der Betätigungsrichtung des Schaltelementes über die Antriebseinrichtung zur Verfügung stehenden Betätigungskraft entgegenwirkt.

Bei einer mit einem Haltebereich der Steuerkurve ausgeführten Ausführungsform der erfindungsgemäßen Vorrichtung weist der Verlauf der Steuerkurve einen Bereich auf, in dem die über die Einrichtung zur Verfügung stehende Kraft sowohl einer entgegen der Betätigungsrichtung des Schaltelementes über die Antriebseinrichtung zur Verfügung stehenden Betätigungskraft als auch einer im Bereich des Schaltelementes in Betätigungsrichtung des Schaltelementes angreifenden Betätigungskraft entgegenwirkt. Bei dieser Ausführungsform ist das Schaltelement in einem definierten Betriebszustand haltbar entgegen einer entgegen der Betätigungsrichtung des Schaltelementes von der Antriebseinrichtung anliegenden Betätigungskraft und auch entgegen einer im Bereich des Schaltelementes in Betätigungsrichtung des Schaltelementes angreifenden Betätigungskraft, beispielsweise bei Anliegen einer entgegen der Betätigungsrichtung des Schaltelementes anliegenden Betätigungskraft kleiner als eine definierte Betätigungskraft, womit beispielsweise eine Dauerbestromung einer mit einem Elektromotor ausgeführten Antriebseinrichtung auf konstruktiv einfache Art und Weise vermieden wird.

Bei einer besonders bauraumgünstigen Ausführungsform der erfindungsgemäßen Vorrichtung ist ein weiteres Schaltelement über die Antriebseinrichtung betätigbar, wobei über den Koppelbereich der Einrichtung im Bereich einer weiteren Steuerkurve die Kraft in eine Betätigungskette zwischen der Antriebseinrichtung und dem weiteren Schaltelement einleitbar ist.

Um das weitere Schaltelement in ähnlichem Umfang wie das Schaltelement über die Einrichtung betriebszustandsabhängig betätigen zu können, steht der Koppelbereich bei einer weiteren vorteilhaften Ausführungsform der erfindungsgemäßen Vorrichtung in Abhängigkeit des rotatorischen Antriebes der Antriebseinrichtung entlang des Verlaufes der weiteren Steuerkurve mit der weiteren Steuerkurve in Wirkverbindung und die über die Einrichtung einleitbare Kraft variiert zumindest in Abhängigkeit des Verlaufes der weiteren Steuerkurve betriebszustandsabhängig.

Schließt sich der Verlauf der weiteren Steuerkurve an den Verlauf der Steuerkurve an und ist zwischen den Steuerkurven ein Haltebereich vorgesehen, in welchem der Koppelbereich unterhalb einer definierten Betätigungskraft der Antriebseinrichtung für das Schaltelement oder das weitere Schaltelement gehalten ist und in dem eine antriebseinrichtungsseitige Betätigung der Schaltelemente unterbleibt, ist die erfindungsgemäße Vorrichtung mit einem Rastbereich ausgebildet, der zusätzlich als eine Initialisierung der Lagesensierung einer mit einem Elektromotor ausgeführten Antriebseinrichtung einsetzbar ist und über den ein definierter Betriebszustand der Schaltelemente ohne antriebseinrichtungsseitige Betätigung haltbar ist.

Weist die Antriebswandlereinrichtung zwei miteinander in Wirkverbindung stehende Baugruppen auf, wobei eine der Baugruppen verdrehbar ausgeführt und mit der Antriebseinrichtung verbunden ist, während die andere Baugruppe in axialer Richtung verstellbar und drehfest ausgeführt ist, ist die axiale Betätigungsbewegung für das Schaltelement in Abhängigkeit der Rotation der verdrehbaren Baugruppe zur Verfügung stellbar.

Bei einer bauraum- und kostengünstigen Ausführungsform der erfindungsgemäßen Vorrichtung ist die Antriebswandlereinrichtung als ein Kugel-Rampe-System und die Steuerkurve und/oder die weitere Steuerkurve im Bereich einer Kurvenscheibe des Kugel-Rampe-Systems vorgesehen.
Als Sonderform der Kugel-Rampe-Systems kann auch ein Kugel-Spindel-System verwendet werden.

Eine maximale von der Antriebsmaschine zur Verfügung stellende Leistung ist dadurch begrenzbar, dass ein Verlauf der Steuerkurve und/oder der weiteren Steuerkurve in Abhängigkeit eines sich während einer Betätigung des Schaltelementes und/oder des weiteren Schaltelementes einstellenden Verlaufes einer in Öffnungsrichtung des Schaltelementes und/oder des weiteren Schaltelementes wirkenden Öffnungskraft derart angepasst ist, dass eine von der Antriebseinrichtung zur Verfügung zu stellende Betätigungskraft vorzugsweise zumindest in einem vordefinierten Betriebsbereich des Schaltelementes und/oder des weiteren Schaltelementes wenigstens annähernd konstant ist.

Bei einer weiteren vorteilhaften Ausführungsform der erfindungsgemäßen Vorrichtung ist das weitere Schaltelement über einen mit einer zusätzlichen Steuerkurvein Wirkverbindung bringbaren Koppelelementbereich auf bauraumgünstige Art und Weise betätigbar, wobei eine am weiteren Schaltelement anlegbare Betätigungskraft aus einer Antriebskraft der Antriebseinrichtung und der über die Einrichtung in die Betätigungskette zwischen dem weiteren Schaltelement und der Antriebseinrichtung einleitbaren Kraft resultiert.

Wiederum bei weiteren vorteilhaften Ausführungsformen der erfindungsgemäßen Vorrichtung ist entweder die Steuerkurve und/oder die weitere Steuerkurve und/oder die zusätzliche Steuerkurve in Abhängigkeit des Antriebes der Antriebseinrichtung drehbar ausgeführt und der Koppelbereich und/oder der Koppelelementbereich gehäusefest ausgeführt oder die Steuerkurve und/oder die weitere Steuerkurve und/oder die zusätzliche Steuerkurve gehäusefest ausgeführt und der Koppelbereich und/oder der Koppelelementbereich in Abhängigkeit des Antriebes der Antriebseinrichtung drehbar ausgeführt.

Damit ist die erfindungsgemäße Vorrichtung auf einfache Art und Weise in Abhängigkeit des jeweils vorliegenden Anwendungsfalles an einen jeweils zur Verfügung stehenden Bauraum angepasst gestaltbar und in bestehende Getriebesysteme mit geringem konstruktivem Aufwand integrierbar.

Sowohl die in den Patentansprüchen angegebenen Merkmale als auch die in den nachfolgenden Ausführungsbeispielen der erfindungsgemäßen Vorrichtung angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen der erfindungsgemäßen Vorrichtung ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden. Es zeigt:
- Fig. 1: eine schematisierte Darstellung einer ersten Ausführungsform der erfindungsgemäßen Vorrichtung;
- Fig. 2: mehrere Kraftkennlinien, die sich über dem Betätigungsverlauf eines Schaltelementes ausgehend vom vollständig geöffneten Betriebszustand in Richtung des vollständig geschlossenen Betriebszustandes des Schaltelementes einstellen;
- Fig. 3: eine erste Seitenansicht einer dreidimensionalen Darstellung einer zweiten Ausführungsform der erfindungsgemäßen Vorrichtung, über die zwei Schaltelemente sequentiell betätigbar sind;
- Fig. 4: eine Fig. 3 entsprechende Darstellung der zweiten Ausführungsform der erfindungsgemäßen Vorrichtung in einer zweiten Seitenansicht;
- Fig. 5: ein Teil der Vorrichtung gemäß Fig. 3 in einer Systembilddarstellung;
- Fig. 6: eine schematisierte Darstellung einer Steuerkurve, einer weiteren Steuerkurve und einer zusätzlichen Steuerkurve der Vorrichtung gemäß Fig. 3; und
- Fig. 7: mehrere Drehmomentverläufe, die sich während einer Betätigung des Schaltelementes und des weiteren Schaltelementes während einem Durchfahren der Verläufe der Steuerkurve, der weiteren Steuerkurve und der zusätzlichen Steuerkurve der Vorrichtung gemäß Fig. 3 einstellen.

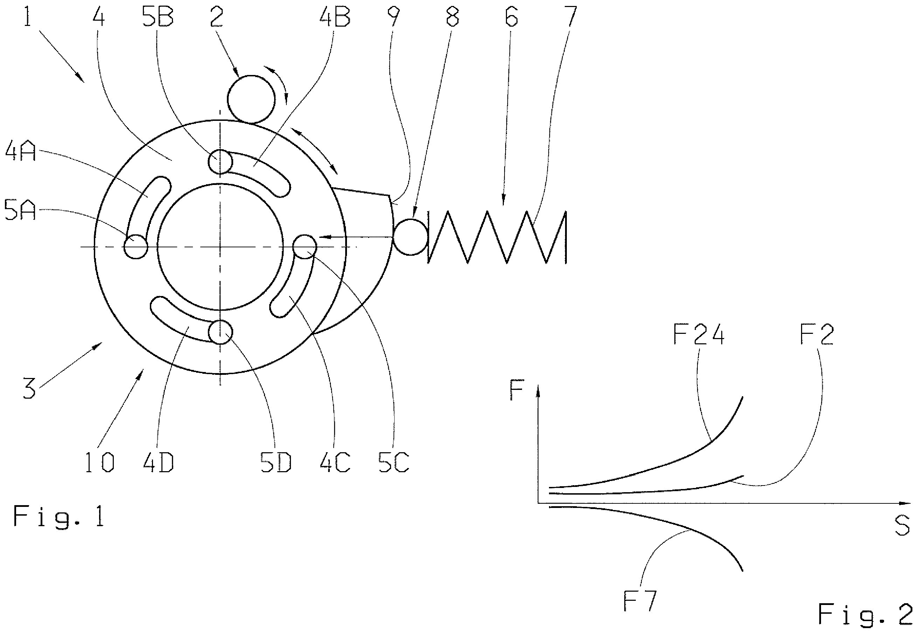

Fig. 1 zeigt eine stark schematisierte Darstellung einer Vorrichtung 1 zum Verändern eines Betriebszustandes eines beispielsweise als reibschlüssige Kupplung ausgeführten Schaltelementes bzw. zum Betätigen des Schaltelementes. Zur Betätigung des Schaltelementes umfasst die Vorrichtung 1 eine Antriebseinrichtung 2, die vorliegend eine als Elektromotor ausgeführte und in Fig. 1 nicht näher dargestellte Antriebsmaschine und eine zwischen der Antriebsmaschine und dem Schaltelement angeordnete Antriebswandleranrichtung 3, in deren Bereich eine rotatorische Antriebsbewegung der Antriebsmaschine in eine translatorische Betätigungsbewegung des Schaltelementes umwandelbar ist. In Abhängigkeit des jeweils vorliegenden Anwendungsfalles besteht auch die Möglichkeit, die Antriebseinrichtung 2 mit einem hydraulischen Motor oder dergleichen auszuführen, mit welchem der für die Betätigung des Schaltelementes erforderliche rotatorische Antrieb in gewünschtem Umfang zur Verfügung stellbar ist.

Die Antriebswandlereinrichtung 3 umfasst vorliegend zwei miteinander in Wirkverbindung stehende Baugruppen 4, die als Kurvenscheiben ausgebildet sind und Teile eines Kugel-Rampen-Systems darstellen, wobei in Fig. 1 lediglich eine der beiden Kurvenscheiben 4 gezeigt ist. Zwischen den Kurvenscheiben 4, die in an sich bekannter Art und Weise mit jeweils vier Kugelsteuerflächen 4A bis 4D ausgeführt sind, sind vier Kugelelemente 5A bis 5D angeordnet, womit eine Drehbewegung der Kurvenscheibe 4 gegenüber der nicht dargestellten weiteren Kurvenscheibe, die sowohl in axialer Richtung als auch rotatorisch festgelegt ist, eine axiale Verstellung der Kurvenscheibe 4 zur Folge hat. Dabei wird die Kurvenscheibe 4 in Abhängigkeit der im Bereich der Antriebseinrichtung 2 eingestellten Antriebsdrehrichtung entweder in Richtung des Schaltelementes oder von diesem weg bewegt.

Der Antriebswandlereinrichtung 3 ist vorliegend eine Einrichtung 6 mit einem vorgespannten Federelement 7 zugeordnet, das vorliegend über einen als Kugel ausgeführten Koppelbereich 8 mit einer Steuerkurve 9 in Wirkverbindung steht und dessen Federkraft in eine Betätigungskette 10 zwischen der Antriebseinrichtung 2 und dem Schaltelement einleitbar ist. Der Koppelbereich 8 steht in Abhängigkeit eines rotatorischen Antriebes der Antriebseinrichtung 2 entlang eines Verlaufes der Steuerkurve 9 mit der Steuerkurve 9 in Wirkverbindung und die über Einrichtung 6 einleitbare Kraft variiert in Abhängigkeit des Verlaufs der Steuerkurve 9 betriebszustandsabhängig.

Die Steuerkurve 9 ist vorliegend am äußeren Umfang der Kurvenscheibe 4 vorgesehen und mittels des in radialer Richtung federbelasteten Koppelbereiches 8, der beispielsweise als Kugellager ausgeführt sein kann, mit der Kompensationskraft der Einrichtung 6 beaufschlagt. Die auf die Steuerkurve 9 einwirkende bzw. in diesem Bereich in die Betätigungskette 10 eingeleitete Kraft der Einrichtung 6 stellt eine in Abhängigkeit der Federkraft des Federelementes 7 stehende Kraft zur Verfügung, die in Verbindung mit dem sich über den Verlauf der Steuerkurve 9 zumindest bereichsweise ändernden Kurvenbahnwinkels eine zusätzliche Drehunterstützung im Bereich der Antriebswandlereinrichtung 3 ergibt.

Dabei ist der Verlauf der Steuerkurve 9 derart ausgeführt, dass die über die Einrichtung 6 zur Verfügung stehende Kraft über den gesamten Bereich des Verlaufes der Steuerkurve 9 additiv zu einer in Schließrichtung des Schaltelementes über die Antriebseinrichtung 2 zur Verfügung stehenden Betätigungskraft der Antriebseinrichtung wirkt. Somit stellt die Einrichtung 6 eine Kompensationseinrichtung dar, in deren Bereich bei der Montage eine Kraft gespeichert wird, die einer im Bereich des Schaltelementes in Öffnungsrichtung wirkenden Öffnungskraft in Abhängigkeit eines Stellweges des Schaltelementes entgegensteht. Die über die Einrichtung 6 zur Verfügung stehende Kompensationskraft ermöglicht, dass die Antriebsmaschine der Antriebseinrichtung 2 je nach Auslegung der Vorrichtung 1 zum Betätigen des Schaltelementes nur noch eine Restkraft der im Bereich des Schaltelementes wirkenden Öffnungskraft bei einem Schließvorgang des Schaltelementes überwinden muss und daher hinsichtlich Bauaufwand, Stromaufnahme und dem zur Verfügung stellenden Drehmoment mit geringerer Leistungsfähigkeit auszulegen ist.

Darüber hinaus besteht die Möglichkeit, wenn die über die Einrichtung 6 zur Verfügung stehende Kompensationskraft geringer ist, als die im Bereich des Schaltelementes in Öffnungsrichtung wirkende Öffnungskraft, dass das Schaltelement bei einer antriebseinrichtungsseitigen Betätigungskraft gleich Null in einen geöffneten Betriebszustand übergeht, wobei die Einrichtung 6 und das mit definierter Elastizität ausgeführte Schaltelement ihre Federenergien im Betrieb mit der Vorrichtung 1 jeweils austauschen.

Generell wird über die Vorrichtung 1 das zu betätigende Schaltelement in mehreren Abschnitten seines Betätigungsbereiches von nur einem von der Kraft der Einrichtung 6 beaufschlagten Element, d. h. vorliegend im Bereich der Kurvenscheibe 4, zumindest in einer Funktion beeinflusst bzw. unterstützt, wobei die Antriebseinrichtung 2 durch die einrichtungsseitige Kompensationskraft hinsichtlich Bauaufwand, Stromaufnahme und Drehmoment günstig auslegbar ist.

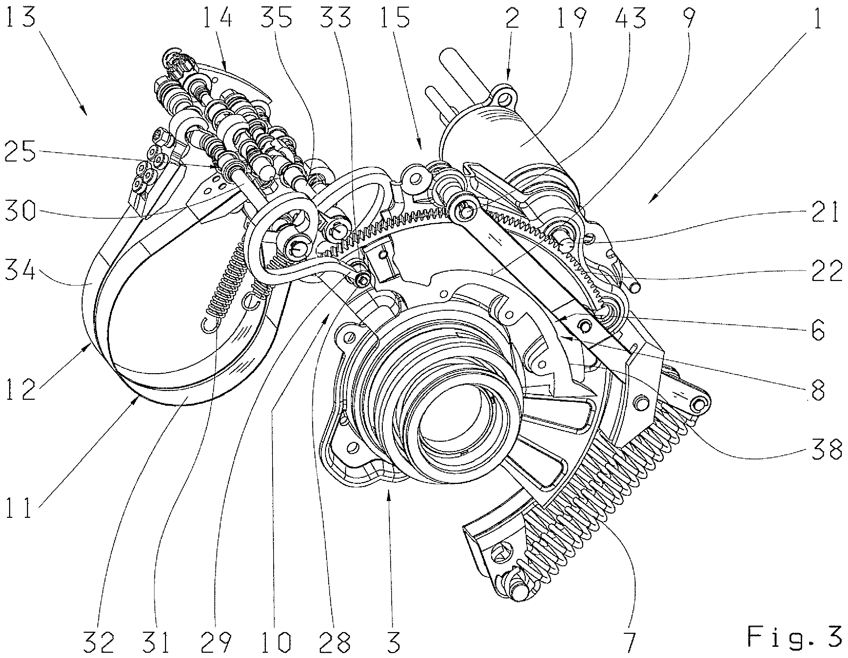

Sowohl die Vorrichtung 1 gemäß Fig. 1 sowie die zu Fig. 3 bis Fig. 6 später näher beschriebene weitere Ausführungsform der Vorrichtung 1 sind zur Betätigung beliebig ausgeführter Schaltelemente, wie reib- und/oder formschlüssige Schaltelemente, die als Kupplungen oder als Bremsen ausgeführt werden können, geeignet, wobei über die Vorrichtung 1 jeweils der Energieaufwand im Bereich eines rotatorischen Antriebes, wie eines Elektromotors, eines hydraulischen Antriebsmotors, oder dergleichen durch die im Bereich der Einrichtung 6 zur Verfügung gestellte Kraft bauraumgünstig bei gleichzeitig geringem konstruktiven Aufwand reduzierbar ist.

Die grundsätzliche Wirkungsweise, die über die Vorrichtung 1 gemäß Fig. 1 bzw. gemäß Fig. 3 bzw. dessen Einrichtung 6 zur Verfügung gestellt wird, zeigt Fig. 2 auf einfache Art und Weise anhand von drei Kraftkennlinien, die über einen Verformungsweg s des Federelementes 7 aufgetragen sind. Ausgehend von einem Verformungsweg s=0 ist die über das Federelement 7 an der Antriebswandlereinrichtung 3 anliegende Kompensationskraft F7 im Wesentlichen gleich Null während die im Bereich des Schaltelementes in Öffnungsrichtung wirkende Kraft F24 während einer Betätigung des Schaltelementes in Schließrichtung um den über das Federelement 7 aktuell zur Verfügung gestellten Kompensationskraftwert F7 größer als eine von der Antriebseinrichtung 2 erzeugte Schließkraft F2 ist.

Während einer zunehmenden Betätigung des Schaltelementes in Schließrichtung steigt der Verformungsweg s des Federelementes 7 an, wobei auch die im Bereich des Schaltelementes in Öffnungsrichtung des Schaltelementes wirkende Kraft F24 mit steigendem Schließgrad des Schaltelementes größer wird. Da die Kompensationskraft F7 des Federelementes 7 der Einrichtung 6 auslegungsbedingt ebenfalls ansteigt, bleibt die von der Antriebseinrichtung 2 zur Verfügung zu stellende Betätigungskraft F2 während der Erhöhung der Übertragungsfähigkeit des Schaltelementes wenigstens annähernd konstant, womit das Schaltelement selbst während angeforderter Haltephasen, während welchen die Übertragungsfähigkeit des Schaltelementes konstant zu halten ist, mit einer geringen Betätigungskraft der Antriebseinrichtung 2 und somit mit einer einen Wirkungsgrad nur gering beeinträchtigenden Leistungsaufnahme durch die Antriebseinrichtung 2 realisierbar sind.

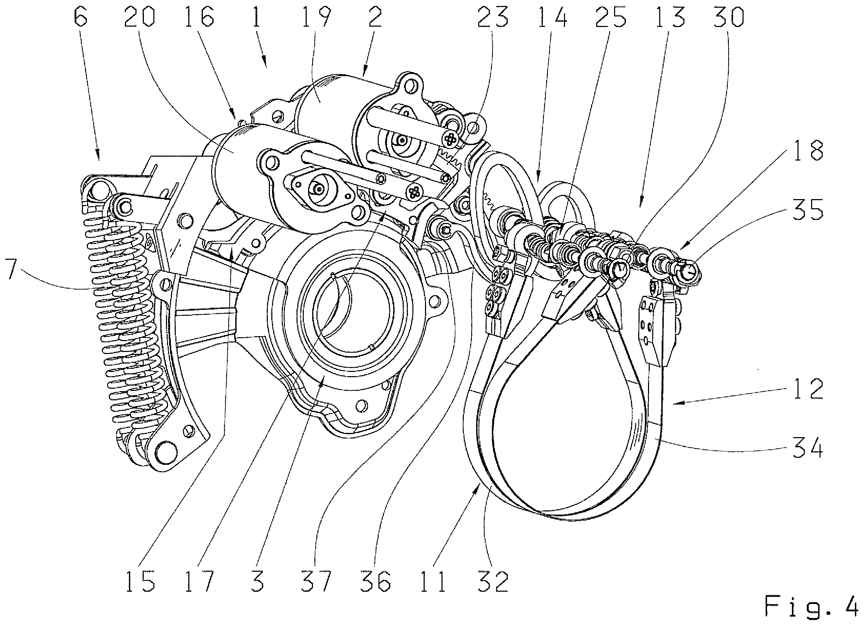

Fig. 3 und Fig. 4 zeigen jeweils eine dreidimensionale Teilseitenansicht eines Bereiches einer Kupplungsglocke eines Doppelkupplungsgetriebes, in dem die Vorrichtung angeordnet ist und bei welchem über die Vorrichtung 1 und die Antriebswandlereinrichtung 3 sowie über die Einrichtung 6 und eine zusätzliche Betätigungseinrichtung 14 ein als reibschlüssige Kupplung ausgeführtes Schaltelement eines nicht näher dargestellten Doppelkupplungssystems sowie ein weiteres als Bandbremse ausgeführtes Schaltelement 11 betätigbar sind. Des Weiteren ist eine zweite in der Zeichnung nicht näher dargestellte reibschlüssige Kupplung des Doppelkupplungssystems und eine weitere Bandbremse 12 über eine zweite Vorrichtung 15 betätigbar, die im Wesentlichen den gleichen Aufbau wie die Vorrichtung 1 aufweist. Dabei umfasst die Vorrichtung ebenfalls eine Antriebseinrichtung 16, mit der Antriebswandlereinrichtung 3, eine Einrichtung 17 und eine Betätigungseinrichtung 18, die mit der Antriebswandlereinrichtung 3 der Vorrichtung 1 in Wirkverbindung stehen, um das zweite Schaltelement des Doppelkupplungssystem und das Schaltelement 12 in gleichem Umfang wie das Schaltelement des Doppelkupplungssystems und das weitere Schaltelement 11 in der nachfolgend näher beschriebenen Art und Weise betätigen zu können.

Zugunsten der Übersichtlichkeit wird in der nachfolgenden Beschreibung im Wesentlichen lediglich auf die Betätigung des Schaltelementes und des weiteren Schaltelementes 11 durch die Vorrichtung 1, die Einrichtung 6, die Antriebswandlereinrichtung 3 und der zusätzlichen Betätigungseinrichtung 14 näher eingegangen. Bezüglich der Funktionsweise der zweiten Vorrichtung 15, der zweiten Antriebseinrichtung 16, der zweiten Einrichtung 17 und der zweiten Betätigungseinrichtung 18 wird deshalb auf die Beschreibung der Funktionsweise der Vorrichtung 1 und der damit zusammenwirkenden Baugruppen verwiesen.

Um die vier jeweils Stellsysteme darstellenden Schaltelemente des Doppelkupplungssystems und die zwei Bandbremsen 11 und 12 mit nur zwei Elektromotoren 19 und 20 der Vorrichtungen 1 und 16 betätigen zu können, weisen die Stellmechaniken der Vorrichtungen 1 und 15 im Bereich der Antriebswandlereinrichtung 3 eine Überschneidung auf. Jeweils ein Elektromotor 19 oder 20 treibt über ein Ritzel 21, von welchem nur eines in Fig. 3 dargestellt ist, jeweils ein Zahnradsegment 22, 23 der Vorrichtung 1 bzw. der Vorrichtung 15 an. Das Zahnradsegment 22 ist dem Elektromotor 19 der Antriebseinrichtung 2 und das weitere Zahnradsegment 23 ist dem Elektromotor 20 der zweiten Antriebseinrichtung 16 zugeordnet. Die Zahnradsegmente 22 und 23 sind beide mit der Antriebswandlereinrichtung 3 wirkverbunden, die vorliegend als ein Doppelkugelgewindetrieb ausgeführt ist. Die Antriebswandlereinrichtung 3 des Doppelkupplungsgetriebes 13 gemäß Fig. 3 und Fig. 4 kann beispielsweise einen in der DE 10 2008 012 894 A1 näher beschriebenen Aufbau aufweisen, um jeweils eines der beiden Schaltelemente des Doppelkupplungssystems in gewünschtem Umfang über den Elektromotor 19 oder den Elektromotor 20 betätigen zu können.

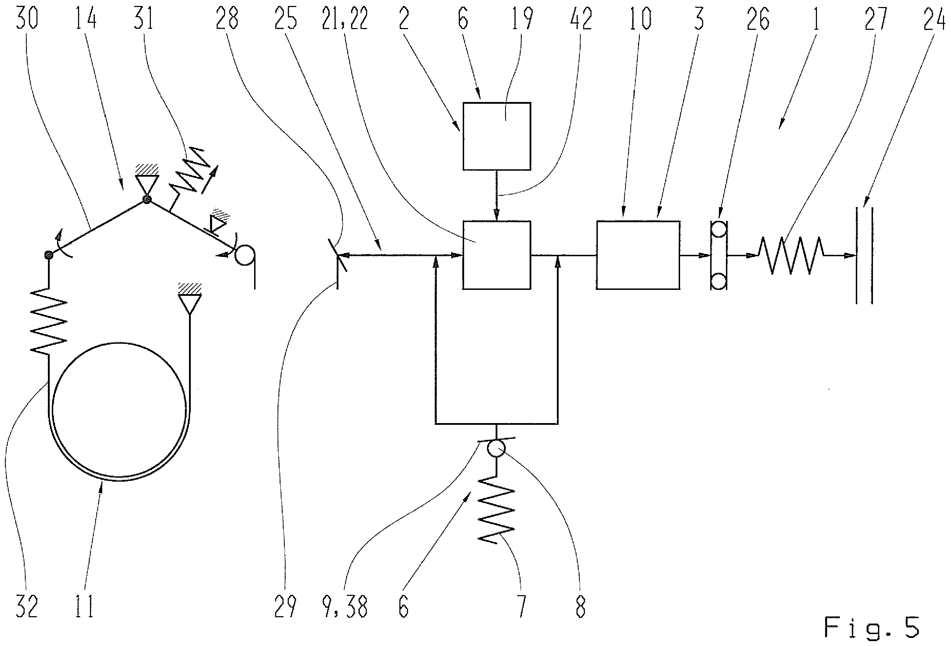

Zum besseren Verständnis des grundsätzlichen Aufbaus der Vorrichtungen 1 und 15 ist in Fig. 5 ein Systembild gezeigt, das alle die Betätigungskette 10 zwischen der Antriebseinrichtung 2 und dem Schaltelement 24 des Doppelkupplungssystems bildenden Bauteile der Vorrichtung 1 und auch die eine Betätigungskette 25 zwischen der Antriebseinrichtung 2 und der Bandbremse 11 bildenden Bauteile der Vorrichtung 1 in symbolhafter Darstellung zeigt. Die Antriebseinrichtung 2 bzw. deren Elektromotor 19 treibt über eine Motorausgangswelle 42 und das damit verbundene Ritzel 21 das wiederum damit in Zahneingriff stehende Zahnradsegment 22 an, das in der Betätigungskette 10 mit der Antriebswandlereinrichtung 3 verbunden ist. Im Bereich der Antriebswandlereinrichtung 3 wird der rotatorische Antrieb der Antriebseinrichtung 2 in bekannter Weise in eine translatorische Betätigungsbewegung für das Schaltelement 24 des Doppelkupplungssystems umgewandelt, wobei die translatorische Antriebsbewegung über ein Axialeinrücklager 26, das zur Drehentkopplung zwischen der Antriebswandlereinrichtung 3 und dem Schaltelement 24 vorgesehen ist, auf das Schaltelement 24 übertragen wird. Elastizitäten im Bereich des Schaltelementes 24, die aus einer Membranfeder, Belagfedern und dergleichen resultieren, sind symbolisch durch das Federelement 27 in Fig. 5 wieder gegeben.

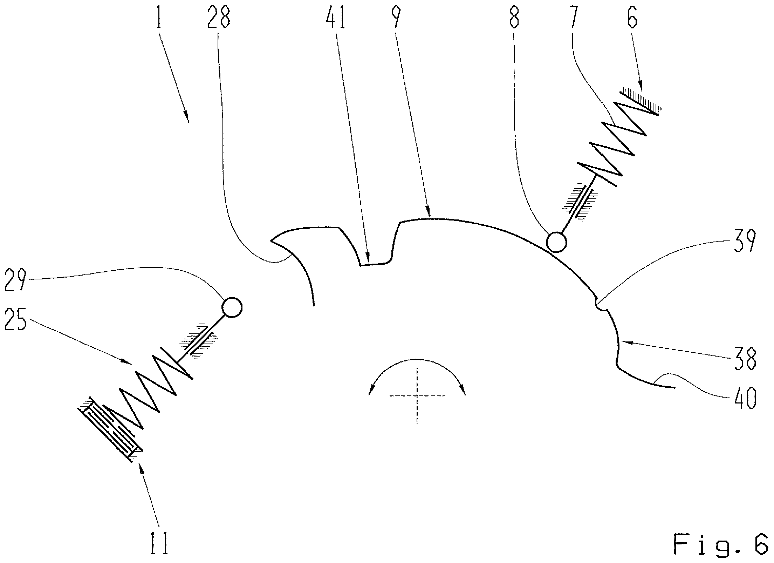

Zur Betätigung des weiteren Schaltelementes 11 bzw. der Bandbremse ist das Zahnradsegment 22 mit einer in Fig. 6 näher gezeigten zusätzlichen Steuerkurve 28 ausgeführt, in deren Bereich das Zahnradsegment 22 mit einem als Stellhebel ausgeführten Koppelelementbereich 29 in Wirkverbindung bringbar ist, der wiederum mit einer Exzenterwelle 30 drehfest verbunden ist. Bei einer Anlage des Stellhebels 29 an der zusätzlichen Steuerkurve 28 und gleichzeitig entsprechendem rotatorischen Antrieb durch die Antriebseinrichtung 2 wird der Stellhebel 29 entgegen einer Rückstellfeder 31 verschwenkt. Aus der Schwenkbewegung des Stellhebels resultiert eine Drehbewegung der Exzenterwelle 30, die ein Bremsband 32 der Bandbremse 11 gegen eine nicht näher dargestellte Eingangswelle des Doppelkupplungsgetriebes 13 zieht, um eine Drehzahlanpassung der Eingangswelle während einer Hochschaltung im Doppelkupplungsgetriebe 13 durchführen zu können.

Eine am weiteren Schaltelement 11 anlegbare Betätigungskraft resultiert damit aus einer Antriebskraft der Antriebseinrichtung 2 und der über die Einrichtung 6 in die Betätigungskette 25 zwischen dem weiteren Schaltelement 11 und der Antriebseinrichtung 2 einleitbaren Kraft. Der Stellhebel 29 ist vorliegend mit einer drehbaren Rolle 33 mit der zusätzlichen Steuerkurve 28 in Wirkverbindung bringbar, womit die Betätigungskraft des Elektromotors 19 mit geringen Reibkräften in Richtung der Bandbremse 11 weiterleitbar ist.

Bei der Ausführungsform der Vorrichtung 1 und der Vorrichtung 15 gemäß Fig. 3 und Fig. 4 ist der Koppelbereich 8 als um einen gehäuseseitig festgelegten Drehpunkt 43 ausgeführtes Hebelelement ausgebildet, das in einem zum Drehpunkt 43 abgewandten Endbereich über das Federelement 7 gegen die Steuerkurve 9 bzw. gegen die Steuerkurve 38 gedrückt ist und jeweils in Abhängigkeit des rotatorischen Antriebes der Antriebseinrichtung 2 entlang des Verlaufes der Steuerkurve 9 oder entlang des Verlaufes der weiteren Steuerkurve 38 mit der Steuerkurve 9 oder mit der weiteren Steuerkurve 38 in Wirkverbindung steht und die über die Einrichtung 6 einleitbare Kraft in Abhängigkeit des Verlaufs der Steuerkurve 9 bzw. der weiteren Steuerkurve 38 betriebszustandsabhängig variiert.

Die Betätigung des Schaltelementes 24 und der Bandbremse 11 erfolgen jeweils innerhalb voneinander getrennten Winkelbereichen der Schwenkbewegung des Zahnradsegmentes 22. Die mechanische Kopplung der Betätigung des Schaltelementes 24 und der Bandbremse 11 ist vorliegend möglich, weil eine Betätigung des Schaltelementes 24 und der zugeordneten Bandbremse 11 nicht gleichzeitig erfolgt. Eine durch die mechanische Kopplung der Betätigung des Schaltelementes 24 und des weiteren Schaltelementes 11 im Bereich der Vorrichtung 1 eventuelle Wechselwirkung, die beispielsweise aus einem vorgespannten Einbau des Schaltelementes 24 im Bereich des Zahnradsegmentes 22 generierten Stellmomentes resultiert und durch die die Bandbremse 11 betätigt werden könnte, wird durch die Einrichtung 6 verhindert. Falls die durch die mechanische Kopplung entstehende Wechselwirkung nicht vollständig kompensierbar ist, sollte diese zumindest durch die Einrichtung 6 auf ein Mindestmaß reduziert werden. Über die Einrichtung 6 und die darüber zur Verfügung stehende Kompensationskraft wird vermieden, dass die Kupplungsfeder des Schaltelementes 24 die Bandbremse 11 betätigt. Das bedeutet, dass zur Betätigung der Bandbremse 11 in jedem Fall ein positives Drehmoment von der Antriebseinrichtung 2 aufzubringen ist. So kann sichergestellt werden, dass die Bandbremse 11 auch im stromlosen Zustand zuverlässig öffnet.

Die Zahnradsegmente 22 und 23 rotieren um eine Hauptwelle des Doppelkupplungsgetriebes 13. Der Schwenkbereich der Zahnradsegmente 22 und 23 ist jeweils durch Lagerschalen der über die Bandbremsen 11 und 12 abbremsbaren Eingangswellen begrenzt. Aufgrund dieser geometrischen Randbedingungen ist ein maximaler Schwenkwinkel der Zahnradsegmente 22 und 23 limitiert. Dieser maximale Stellbereich wird bei der Auslegung der Elektromotoren 19 und 20 und der Übersetzung für die Schaltelement- und Bandbremsenbetätigung aufgeteilt. Des Weiteren ist es sinnvoll bei der Auslegung neben den Eckdaten der Schaltelemente des Doppelkupplungssystems, wie einen Stellweg und eine maximale Axialkraft im Bereich der Axialausrücklager 26 und der Elektromotoren 19 und 20 auch eine erforderliche Stellgenauigkeit bei der Betätigung der Schaltelemente 24 des Doppelkupplungssystems und der Bandbremsen 11 und 12 sowie die darstellbaren Übersetzungen im Bereich der Antriebswandlereinrichtung 3 sowie der Stirnradübersetzungen zwischen den Zahnradsegmenten 22 und 23 und den Motorausgangswellen 42 der Elektromotoren 19 und 20 bzw. deren Ritzel 23 zu berücksichtigen. Eine maximal zulässige Bandkraft im Bereich der Bandbremsen 11 und 12 ist mechanisch über die Materialstreckgrenze limitiert, weshalb ein konstruktiver Schutz gegen Überlastung, die beispielsweise einen Bandabriss zur Folge haben kann, im Bereich der Einrichtung 6 vorgesehen ist. Bei der Umsetzung dieser Schutzfunktion sind neben statischen auch dynamische Effekte zu berücksichtigen, da eine kinetische Energie der Elektromotoren 19 und 20 bei Maximaldrehzahl unter Umständen bereits ausreichend ist, die Bremsbänder 32 und 34 der Handbremsen 11 und 12 zu überlasten.

Da sich über den Betriebstemperaturbereich des Doppelkupplungsgetriebes 13 jeweils die relative Lage der Aufhängungspunkte der Bremsbänder 32 und 34 in Bezug auf eine Position der Vorgelegewellen im Getriebegehäuse, das vorliegend aus Aluminium hergestellt ist, wie auch die unbelastete Länge der Bremsbänder 32 und 34, die aus Stahl hergestellt sind, ändert, ist auch diese Änderung bei der Auslegung der Schutzfunktion zu berücksichtigen. Gleichzeitig ist über die Bandbremsen 11 und 12 jeweils eine zur Umsetzung der gewünschten Funktionsweise ausreichende Bremskraft zur Verfügung zu stellen, wobei in keinem Fall die maximal zulässige Bandkraft überschritten werden darf.

Eine absolute Begrenzung des Drehwinkels der die Bandbremsen 11 und 12 betätigenden Exzenterwellen 30 und 35 ist hierbei nicht möglich, weshalb die Schutzfunktion der Bandbremsen 11 und 12 in den Betätigungsmechanismus des Stellhebels 29 und eines weiteren die Bandbremse 12 betätigenden Stellhebels 36 verlagert ist. Grundsätzlich werden die Kennlinien der Bandkräfte der Bandbremsen 11 und 12 jeweils in Abhängigkeit des Rotationswinkels der Exzenterwelle 30 bzw. der Exzenterwelle 35 derart gestaltet, dass Überlastungen im Bereich der Bandbremsen 11 und 12 vermieden werden.

Hierfür wird die zusätzliche Steuerkurve 28 sowie eine dem Stellhebel 36 zugeordnete und im Bereich des Zahnradsegmentes 23 vorgesehene Steuerkurve 37 bzw. deren Verlauf jeweils derart vorgesehen, dass ein nichtlinearer Zusammenhang zwischen der Rotation der Zahnradsegmente 22 und 23 und der Rotation der Exzenterwellen 30 und 35 dargestellt wird. In Zusammenhang mit dem im Bereich der Einrichtung 6 zur Verfügung gestellten Kompensationsmechanismus gelingt es, die verschiedenen Anforderungen zu erfüllen. Zusätzlich soll während passiver Betriebsphasen der Bandbremsen 11 und 12, während welchen keine Bremsung der Eingangswellen des Doppelkupplungsgetriebes 13 erfolgt, über die Bandbremsen 11 und 12 jeweils wenig Bremsmoment an den Eingangswellen anliegt, da ansonsten unerwünschte Verlustmomente erzeugt werden. Aus diesem Grund ist zwischen den Bremsbändern 32 und 34 von den Eingangswellen jeweils ein Lüftspiel vorzusehen. Bezogen auf die Zahnradsegmente 22 und 23 sind die Lüftspiele zwischen den Bremsbändern 32 und 34 der Bandbremsen 11 und 12 und den Eingangswellen über einen geringen Schwenkwinkel, vorzugsweise von 5 Grad, der Zahnradsegmente 22 und 23 zu überwinden.

Bei einem Ausfall der Antriebseinrichtung 2 der Vorrichtung 1 bzw. der zweiten Antriebseinrichtung 16 der Vorrichtung 15, beispielsweise während einer Unterbrechung der Bestromung der Elektromotoren 19 und 20, sollen die Bandbremsen 11 und 12 auf jeden Fall selbsttätig in ihren geöffneten Betriebszustand übergehen und gleichzeitig eine antriebseinrichtungsseitige Betätigung eines geöffneten Schaltelementes des Doppelkupplungsgetriebes 13 in Schließrichtung unterbleibt, um ein Verspannen des Doppelkupplungsgetriebes 13 durch eine gleichzeitige Betätigung der beiden Schaltelemente des Doppelkupplungssystems zu vermeiden. Dies wird auf einfache Art und Weise durch die potentielle Energie gewährleistet, die während eines Spannvorgangs in das Bremsband 32 oder das Bremsband 34 sowie die jeweils zugeordneten Rückstellfedern 31 eingeprägt wird.

Des Weiteren sind die Elektromotoren 19 und 20 der Antriebseinrichtung 2 und der zweiten Antriebseinrichtung 16 derart ausgelegt, dass das zum Schließen des Schaltelementes 24 und des weiteren in der Zeichnung nicht näher dargestellten Schaltelementes des Doppelkupplungssystems erforderliche Kupplungsnennmoment ohne die im Bereich der Einrichtung 6 zur Verfügung stehende Kraft oder die in Öffnungsrichtung der Schaltelemente von den Elektromotoren 19 und 20 aufzubringende Öffnungskraft zur Verfügung stellbar ist. Des Weiteren sollen sowohl das Nennmoment als auch die Nulllage der Schaltelemente 24 des Doppelkupplungssystems in stromlosen Betriebszustand der Elektromotoren 19 und 20 über die Einrichtung 6 gehalten werden. Hierfür ist ein mehr oder weniger stetiger Verlauf der von der Einrichtung 6 in Verbindung mit in Fig. 6 näher gezeigten Verläufe der Steuerkurve 9, der zusätzlichen Steuerkurve 28 und einer weiteren Steuerkurve 38 zur Verfügung zu stellende Kraft bzw. ein Kompensationsmoment darzustellen.

Die von den Elektromotoren 19 und 20 jeweils aufzubringende Antriebskraft, die jeweils entgegen der im Bereich des Schaltelementes 24 und des weiteren Schaltelementes des Doppelkupplungssystems in Öffnungsrichtung der Schaltelemente 24 an diesen angreifend wirkt, nimmt gegen Ende des Betätigungsweges immer weiter ab und weist bei 100 % des Kupplungsnennmomentes jeweils einen Nulldurchgang auf. Ab dieser Position wird das Schaltelement 24 und das weitere Schaltelement des Doppelkupplungssystems auch bei einer Antriebsleistung der Elektromotoren 19 und 20 von wenigstens annähernd gleich Null geschlossen. Um jeweils eine Überpressung des Schaltelementes 24 und des weiteren Schaltelementes des Doppelkupplungssystems zu verhindern, wird ein zweiter Nulldurchgang des Verlaufs des von der Einrichtung 6 in Verbindung mit den Steuerkurven 9 und 38 zur Verfügung gestellten Kompensationsmomentes realisiert.

Zur Umsetzung der vorbeschriebenen Anforderungen während der Betätigung der Bandbremse 11 und des Schaltelementes 24 steht der Koppelbereich 8 der Einrichtung 6 in Abhängigkeit des rotatorischen Antriebes der Antriebseinrichtung 2 während der Betätigung des Schaltelementes 24 entlang des Verlaufes der Steuerkurve 9 mit der Steuerkurve 9 in Wirkverbindung. Dabei variiert die über die Einrichtung 6 einleitbare Kraft in Abhängigkeit des Verlaufes der Steuerkurve 9 betriebszustandsabhängig. Während der Betätigung der Bandbremse 11 steht der Koppelbereich 8 der Einrichtung 6 in Abhängigkeit des rotatorischen Antriebes der Antriebseinrichtung 2 entlang des Verlaufes der Steuerkurve 38 mit der Steuerkurve 38 in Wirkverbindung. Dann variiert die über die Einrichtung einleitbare Kraft in Abhängigkeit des Verlaufs der weiteren Steuerkurve 38 betriebszustandsabhängig. Gleichzeitig steht der Koppelelementbereich 29 während der Betätigung der Bandbremse 11 mit der zusätzlichen Steuerkurve 28 in Wirkverbindung, um die Bandbremse 11 in gewünschtem Umfang mit der Vorgelegewelle in Eingriff zu bringen oder aus dem Eingriff mit dieser zu führen.

Der Verlauf der zusätzlichen Kurvenbahn 28 ist dabei derart vorgesehen, dass der Betätigungsweg für die Bandbremse 11 degressiv durchlaufen wird. Das heißt, dass durch die Auslegung bzw. die Gestaltung des Verlaufs der zusätzlichen Steuerkurve 28 eine über dem Drehwinkel des Zahnradsegmentes 22 variierende Übersetzung zwischen der Antriebseinrichtung 2 und der Bandbremse 11 realisiert wird. Ein Totweg bzw. ein Lüftspiel der Bandbremse 11 ist somit bei entsprechendem Verlauf der zusätzlichen Steuerkurve 28 durch die über den Drehwinkel des Zahnradsegmentes 22 variierende Übersetzung mit höherer Stellgeschwindigkeit durchlaufbar als der Bereich des Verlaufs der zusätzlichen Steuerkurve 28, innerhalb welchem über die Bandbremse 11 ein Bremsmoment an der zugehörigen Vorgelegewelle des Doppelkupplungsgetriebes 13 dargestellt wird. Dadurch ist ein großer Regelbereich realisierbar und gleichzeitig eine gute Regelgüte erreichbar.

Der Verlauf der weiteren Steuerkurve 38 schließt sich an den Verlauf der Steuerkurve 9 an. Um eine Initialisierung der Lagesensierung des Elektromotors 19 der Antriebseinrichtung 2 zur Verfügung zu stellen, ist zwischen den Verläufen der Steuerkurven 9 und 38 ein Rastbereich bzw. ein Haltebereich 39 vorgesehen, in welchem der Koppelbereich 8 der Einrichtung 6 unterhalb einer definierten Betätigungskraft der Antriebseinrichtung 2 für das Schaltelement 24 oder das weitere Schaltelement 11 gehalten ist und eine antriebseinrichtungsseitige Betätigung der Schaltelemente 24 und 11 unterbleibt. Liegt der Koppelbereich 8 der Einrichtung 6 im Haltebereich 39 an der Steuerkurve 9 an, befindet sich das Zahnradsegment 22 in seiner Nulllage. Die Nulllage stellt auch einen sicheren Zustand dar, der in einem Fail-Save-Fall eingenommen werden soll.

Des Weiteren ist über den Haltebereich 39 auch eine Zusatzfunktion zur Fixierung der Aktuatorik darstellbar, mittels der verhindert wird, dass sich das Zahnradsegment 22 aufgrund von im Betrieb auftretenden Vibrationen selbsttätig aus der Nulllage herausdreht.

Bei einem Ausfall der Antriebseinrichtung 2 wird die potentielle Energie einer gespannten Kupplungsfeder des Schaltelementes 24 in kinetische Energie der Massenträgheit des Elektromotors 19 der Antriebseinrichtung 2 umgewandelt. Diese Energie wird im Bereich der Einrichtung 6 und zusätzlich auch im Bereich der Bandbremse 11 aufgenommen. Nach einem Durchlaufen des Haltebereiches 39 und einem sich daran anschließenden Spannen des Bremsbandes 32 der Bandbremse 11 darf ein Restbetrag für die kinetische Energie der Motorträgheit übrig bleiben, um ein Abscheren der Verzahnung des Ritzels 23 durch einen mechanischen Anschlag zu verhindern. In einem zum Haltebereich 39 abgewandten Bereich 40 der weiteren Steuerkurve 38 ist ein Endanschlag und eine Rückstellfunktion für die Betätigung der Bandbremse 11 vorgesehen, womit eine Überbelastung des Bremsbandes 32 der Bandbremse 11 verhindert wird.

In einem zu dem Haltebereich 39 abgewandten Endbereich des Verlaufs der Steuerkurve 9 ist ein Rastbereich 41 vorgesehen, in dem die über die Einrichtung 6 zur Verfügung stehende Kraft sowohl einer in Schließrichtung des Schaltelementes 24 über die Antriebseinrichtung 2 zur Verfügung stehenden Betätigungskraft als auch einer im Bereich des Schaltelementes 24 in Öffnungsrichtung des Schaltelementes 24 angreifenden Betätigungskraft entgegen wirkt, womit bei Anlage des Koppelbereiches 8 am Rastbereich 41 das Schaltelement 24 bei stromlosem Elektromotor 19 im geschlossenen Betriebszustand sicher gehalten ist und zusätzlich eine Endlagenfederung für die Betätigung des Schaltelementes 24 in Schließrichtung zur Verfügung steht. Über den Endlagenfederung wird somit eine zu hohe Belastung im Bereich des Schaltelementes 24 vermieden.

Sowohl im Bereich des Verlaufs der Steuerkurve 9 zwischen dem Haltebereich 39 und dem Rastbereich 41 dient die von der Einrichtung 6 in die Betätigungskette 10 zwischen der Antriebseinrichtung 2 und dem Schaltelement 24 eingeleitete Kraft zur Kompensation der jeweils im Bereich des Schaltelementes 24 in Öffnungsrichtung wirkenden Öffnungskraft, um die von Antriebseinrichtung 2 zur Verfügung zu stellende Betätigungskraft auf ein gewünschtes Maß reduzieren zu können.

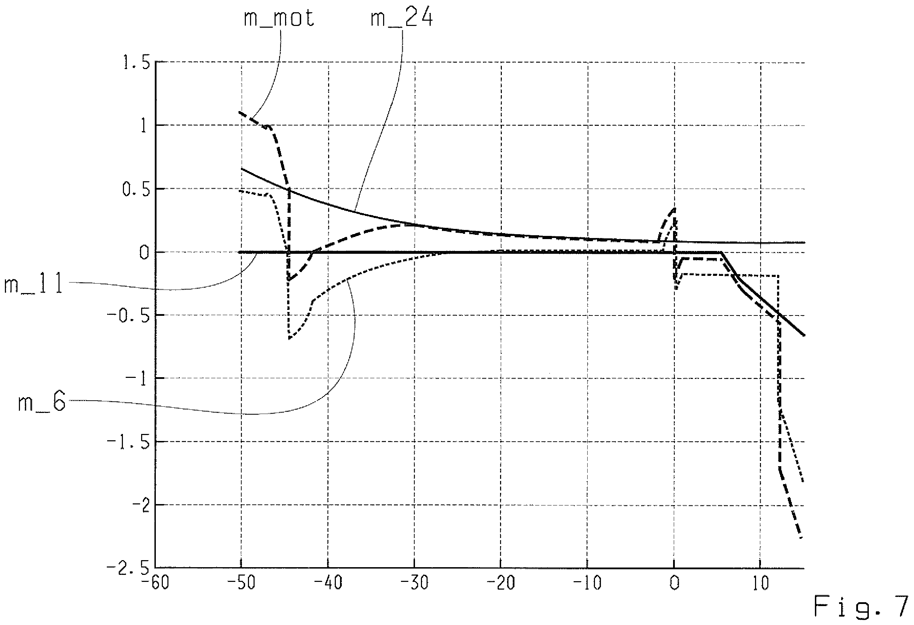

Fig. 7 zeigt mehrere Verläufe verschiedener Drehmomente, die sich über dem Schwenkbereich des Zahnradsegmentes 22 im Bereich des Elektromotors 19 der Antriebseinrichtung 2, des Schaltelementes 24, der Bandbremse 11 und im Bereich der Einrichtung 6 einstellen, wobei die Drehmomentverläufe über einem Drehwinkel bzw. einer Motorlage des Elektromotors 19 in der Einheit rad aufgetragen sind.

Ein Drehmomentverlauf m_mot gibt das jeweils vom Elektromotor 19 über der Motorlage jeweils zur Verfügung gestellte Drehmoment wieder, während ein Drehmomentverlauf m_24 das jeweils aus dem Antriebsmoment des Elektromotors 19 und aus der über die Einrichtung 6 zu Verfügung stehende Kraft resultierende und am Schaltelement 24 anliegende Betätigungsmoment in Abhängigkeit der Motorlage des Elektromotors 19 wieder gibt. Ein weiterer Drehmomentverlauf m_11 zeigt das an der Bandbremse 11 in Abhängigkeit der Motorlage anliegende Betätigungsmoment, während ein Drehmomentverlauf m_6 das von der Einrichtung 6 zur Verfügung gestellte Kompensationsmoment in Abhängigkeit der Motorlage darstellt.

Bei einer Motorlage von etwa 0 rad liegt der Koppelbereich 8 der Einrichtung 6 im Haltebereich 39 zwischen dem Verlauf der Steuerkurve 9 und der weiteren Steuerkurve 38 an. Bei einer Motorlage des Elektromotors 19 oberhalb von 0 rad steht der Koppelbereich 8 der Einrichtung 6 entlang des Verlaufs der weiteren Steuerkurve 38 mit der Steuerkurve 38 in Wirkverbindung, während der Koppelbereich 8 unterhalb der Motorlage von etwa 0 rad entlang des Verlaufes der Steuerkurve 9 mit der Steuerkurve 9 in Wirkverbindung steht und bei etwa -45 rad Motorlage im Bereich 41 der Steuerkurve 9 sich in Anlage mit der Steuerkurve 9 befindet. Bei etwa +13 rad Motorlage liegt der Koppelbereich 8 der Einrichtung 6 am Endanschlag des Bereiches 40 der weiteren Steuerkurve 38 an, weshalb sowohl das vom Elektromotor 19 erzeugte Drehmoment m_mot als auch das Kompensationsmoment m_6 der Einrichtung 6 mit steilem Gradienten ansteigt. Eine Betätigung der Bandbremse 11 erfolgt vorliegend in etwa ab einer Motorlage von +5 rad, ab der das im Bereich der Bandbremse 11 vorliegende Drehmoment m_11 betragsmäßig ansteigt.

Im Bereich einer Motorlage zwischen 0 rad und etwa -30 rad ist das über die Einrichtung 6 in Verbindung mit der Steuerkurve 9 zur Verfügung gestellte Kompensationsmoment m_6 im Wesentlichen gleich 0, da in diesem Bereich das im Bereich des Schaltelementes 24 in Öffnungsrichtung wirkende Kupplungsgegenmoment relativ gering ist. Erst ab einer Motorlage von etwa -30 rad steigt das Kompensationsmoment m_6 betragsmäßig an, um ein vom Elektromotor 19 zur Verfügung zu stellendes Betätigungsmoment zum Schließen des Schaltelementes 24 gering zu halten. Bei etwa -43 rad Motorlage weist das Betätigungsmoment m_mot des Elektromotors 19 seinen Nulldurchgang auf, um anschließend betragsmäßig in negativer Richtung anzusteigen. Bei Erreichen des Endanschlages für die Betätigung des Schaltelementes 24 im Bereich des Rastbereiches 41 der Steuerkurve 9, was in etwa einer Motorlage von -45 rad entspricht, sinkt das Kompensationsmoment m_6 der Einrichtung 6 um das vom Elektromotor 19 zur Verfügung gestellte Betätigungsmoment zunächst in Richtung Null ab und steigt anschließend mit steilem Gradienten in positiver Richtung.

Die Steuerkurven 9, 28 und 38 sind vorliegend als Radialkurven ausgeführt. In Abhängigkeit des jeweils vorliegenden Anwendungsfalles besteht auch die Möglichkeit, dass die Steuerkurven als axial ausgerichtete Kurvenbahnen ausgeführt sind, um vorhandene Bauräume nutzen zu können.

Generell ist es von Vorteil, wenn die Einrichtung über Wälz- oder Gleitkörper mit der Steuerkurve und der weiteren Steuerkurve zusammenwirkt, die entweder linear geführt sind oder um einen Drehpunkt schwenkbar ausgeführt sind und durch eine Kraft, die durch eine Feder, eine hydraulische, pneumatische oder elektromagnetische Einrichtung erzeugte Kraft in Richtung der Steuerkurve und der weiteren Steuerkurve vorgespannt sind, wobei die Vorspannkraft vorzugsweise im Bereich dieser Einrichtung betriebszustandsabhängig variierbar ist, um die über die Einrichtung, über die die Kraft in die jeweilige Betätigungskette einleitbar ist, jeweils zur Verfügung zu stellende Funktion, wie Kompensieren und Halten, im erforderlichen Umfang einstellen zu können.

In Abhängigkeit des Verlaufs der Steuerkurve 9 und/oder der weiteren Steuerkurve 38 besteht die Möglichkeit die über das vorgespannte Wälz- oder Gleitelement eingeleitete Kraft durch mit unterschiedlicher Steigung ausgeführte Bereiche der Steuerkurven zu variieren und die Betätigungseinrichtung für das Schaltelement und auch das weitere Schaltelement damit zu beaufschlagen. Des Weiteren sind Rastfunktionen für das Ablegen des geöffneten und/ oder geschlossenen Schaltelementes ohne antriebseinrichtungsseitige Betätigungsenergie auf konstruktiv einfache Art und Weise realisierbar. Zusätzlich ist auch eine Initialisierung eines Startpunktes für beispielsweise ein Mess- oder Positioniersystem über eine definierte Raste im Bereich einer Steuerkurve realisierbar. Auch eine Kompensation einer antriebseinrichtungsseitigen Betätigungskraft für ein Schaltelement ist durch Verringerung oder Erhöhung der in die Betätigungskette eines Schaltelementes einleitbaren Kraft möglich. Durch eine geeignete Kurvenbahngestaltung oder eine Integration zweier Kurvenbahnen in ein Bauteil ist eine Kompensation bei mehr als einem Schaltelement in bauraumgünstiger Art und Weise realisierbar.

Des Weiteren ist auch eine Endanschlagsfunktion zumindest einer Betätigungsrichtung eines Schaltelementes über eine entsprechende Gestaltung der Steuerkurve zur Verfügung stellbar. Durch eine geeignete Kurvengeometrie kann diese als Endanschlag wirken und dadurch Kraftspitzen beim Anfahren der Endlage reduzieren. Zusätzlich ist eine Aktuatorposition über eine entsprechende Gestaltung einer Steuerkurve in einen zulässigen Bereich zurückstellbar.

Alternativ zu den vorbeschriebenen Ausführungsformen der Vorrichtung 1 besteht auch die Möglichkeit, dass die Steuerkurve 9 und/oder die weitere Steuerkurve 38 und/oder die zusätzliche Steuerkurve 28 gehäuseseitig festgelegt ist und der Koppelbereich 8 der Einrichtung 6 verschwenkbar ausgeführt ist und dadurch entlang des Verlaufes der Steuerkurve 9 und der weiteren Steuerkurve 38 im vorbeschriebenen Umfang führbar ist.

### Bezugszeichen

- 1: Vorrichtung
- 2: Antriebseinrichtung
- 3: Antriebswandlereinrichtung
- 4: Baugruppe
- 4A bis 4D: Kugelsteuerfläche
- 5A bis 5D: Kugelelement
- 6: Einrichtung
- 7: Federelement
- 8: Koppelbereich
- 9: Steuerkurve
- 10: Betätigungskette
- 11: weiteres Schaltelement, Bandbremse
- 12: weitere Bandbremse
- 13: Doppelkupplungsgetriebe
- 14: zusätzliche Betätigungseinrichtung
- 15: zweite Vorrichtung
- 16: zweite Antriebseinrichtung
- 17: zweite Einrichtung
- 18: zweite Betätigungseinrichtung
- 19, 20: Elektromotor
- 21: Ritzel
- 22, 23: Zahnradsegment
- 24: Schaltelement
- 25: Betätigungskette
- 26: Axialeinrücklager
- 27: Federelement
- 28: zusätzliche Steuerkurve
- 29: Koppelelementbereich, Stellhebel
- 30: Exzenterwelle
- 31: Rückstellfeder
- 32: Bremsband
- 33: Rolle
- 34: Bremsband
- 35: Exzenterwelle
- 36: Stellhebel
- 37: Steuerkurve
- 38: weitere Steuerkurve
- 39: Haltebereich
- 40: Bereich der weiteren Steuerkurve
- 41: Rastbereich der Steuerkurve
- 42: Motorausgangswelle
- 43: Drehpunkt
- F2: Kraftverlauf
- F7: Kraftverlauf
- F24: Kraftverlauf
- m_mot: Drehmomentverlauf
- m_6: Drehmomentverlauf
- m_11: Drehmomentverlauf
- m_24: Drehmomentverlauf

## Patentansprüche

1. Vorrichtung (1, 15) zum Verändern eines Betriebszustandes wenigstens eines Schaltelementes (24, 11, 12) mit zwei Schaltelementhälften, die zur Verbindung wenigstens zweier Bauteile miteinander in Wirkverbindung bringbar sind oder zum Trennen der Verbindung zwischen den Bauteilen außer Eingriff führbar sind, und wobei eine Einrichtung (6) vorgesehen ist, über die eine Kraft in eine Betätigungskette (10, 25) zwischen einer Antriebseinrichtung (2, 16), mittels der eine Betätigungskraft für das Schaltelement (24, 11, 12) zur Verfügung stellbar ist, und dem Schaltelement (24, 11, 12) einleitbar ist und die Kraft der Einrichtung (6) im Bereich eines mit einer Steuerkurve (9) in Wirkverbindung stehenden Koppelbereiches (8) der Einrichtung (6) in die Betätigungskette (10, 25) zwischen der Antriebseinrichtung (2) und dem Schaltelement (24, 11, 12) einleitbar ist, wobei der Koppelbereich (8) in Abhängigkeit eines rotatorischen Antriebes der Antriebseinrichtung (2) entlang eines Verlaufes der Steuerkurve (9) mit der Steuerkurve (9) in Wirkverbindung steht und die über die Einrichtung (6) einleitbare Kraft zumindest in Abhängigkeit des Verlaufs der Steuerkurve (9) betriebszustandsabhängig variiert und dass der rotatorische Antrieb der Antriebseinrichtung (2) im Bereich einer Antriebswandlereinrichtung (3) in eine translatorische Betätigungsbewegung des Schaltelementes (24) umwandelbar ist, **dadurch gekennzeichnet, dass** die Antriebswandlereinrichtung (3) zwei miteinander in Wirkverbindung stehende Baugruppen (4) aufweist, wobei eine der Baugruppen verdrehbar sowie in axialer Richtung verstellbar ausgeführt ist und mit der Antriebseinrichtung verbunden ist, während die andere Baugruppe in axialer Richtung festgelegt und verdrehfest ist, und wobei die axiale Betätigungsbewegung für das Schaltelement im Bereich der verdrehbaren Baugruppe in Abhängigkeit der Rotation der verdrehbaren Baugruppe zur Verfügung stellbar ist.

2. Vorrichtung nach Anspruch 1, wobei der Verlauf der Steuerkurve (9) einen Bereich aufweist, in dem die über die Einrichtung (6) zur Verfügung stehende Kraft additiv zu einer entgegen der Betätigungsrichtung in Schließrichtung des Schaltelementes (24) über die Antriebseinrichtung (2) zur Verfügung stehenden Betätigungskraft wirkt.

3. Vorrichtung nach Anspruch 1 oder 2, **dadurch gekennzeichnet, dass** der Verlauf der Steuerkurve (9) einen Bereich (39) aufweist, in dem die über die Einrichtung (6) zur Verfügung stehende Kraft einer in oder entgegen der Betätigungsrichtung oder in Öffnungsrichtung des Schaltelementes (24) über die Antriebseinrichtung (2) zur Verfügung stehenden Betätigungskraft entgegen wirkt.

4. Vorrichtung nach einem der Ansprüche 1 bis 3, **dadurch gekennzeichnet, dass** der Verlauf der Steuerkurve (9) einen Bereich (41) aufweist, in dem die über die Einrichtung (6) zur Verfügung stehende Kraft sowohl additiv zu einer in Betätigungsrichtung des Schaltelementes (24) über die Antriebseinrichtung (2) zur Verfügung stehenden Betätigungskraft als auch einer in im Bereich des Schaltelementes (24) entgegen der Betätigungsrichtung des Schaltelementes angreifenden Betätigungskraft entgegen wirkt.

5. Vorrichtung nach einem der Ansprüche 1 bis 4, **dadurch gekennzeichnet, dass** ein weiteres Schaltelement (11) über die Antriebseinrichtung (2) betätigbar ist, wobei über den Koppelbereich (8) der Einrichtung (6) im Bereich einer weiteren Steuerkurve (38) die Kraft in eine Betätigungskette (25) zwischen der Antriebseinrichtung (2) und dem weiteren Schaltelement (11) einleitbar ist.

6. Vorrichtung nach Anspruch 5, **dadurch gekennzeichnet, dass** der Koppelbereich (8) in Abhängigkeit des rotatorischen Antriebes der Antriebseinrichtung (2) entlang des Verlaufes der weiteren Steuerkurve (38) mit der weiteren Steuerkurve (38) in Wirkverbindung steht und die über die Einrichtung (6) einleitbare Kraft zumindest in Abhängigkeit des Verlaufs der weiteren Steuerkurve (38) betriebszustandsabhängig variiert.

7. Vorrichtung nach Anspruch 5 oder 6, **dadurch gekennzeichnet, dass** sich der Verlauf der weiteren Steuerkurve (38) an den Verlauf der Steuerkurve (9) anschließt und zwischen den Steuerkurven (9, 38) ein Haltebereich (39) vorgesehen ist, in welchem der Koppelbereich (8) unterhalb einer definierten Betätigungskraft der Antriebseinrichtung (2) für das Schaltelement (24) oder das weitere Schaltelement (11) gehalten ist und eine antriebseinrichtungsseitige Betätigung der Schaltelemente (24, 11) unterbleibt.

8. Vorrichtung nach Anspruch 1, **dadurch gekennzeichnet, dass** die Antriebswandlereinrichtung (3) zwei miteinander in Wirkverbindung stehende Baugruppen (22) aufweist, wobei eine der Baugruppen (22) verdrehbar ausgeführt und mit der Antriebseinrichtung (3) verbunden ist, während die andere Baugruppe in axialer Richtung verstellbar und drehfest ausgeführt ist und die axiale Betätigungsbewegung für das Schaltelement (24) in Abhängigkeit der Rotation der verdrehbaren Baugruppe (22) zur Verfügung stellt.

9. Vorrichtung nach einem der Ansprüche 5 bis 7, **dadurch gekennzeichnet, dass** ein Verlauf der Steuerkurve (9) und/oder der weiteren Steuerkurve (38) in Abhängigkeit eines sich während einer Betätigung des Schaltelementes (24) und/oder des weiteren Schaltelementes (11) einstellenden Verlaufes einer entgegen der Betätigungsrichtung des Schaltelementes (24) und/oder des weiteren Schaltelementes (11) wirkenden Kraft derart angepasst ist, dass eine von der Antriebseinrichtung (2) zur Verfügung zu stellende Betätigungskraft vorzugsweise zumindest in einem vordefinierten Betriebsbereich des Schaltelementes (24) und/oder des weiteren Schaltelementes (11) wenigstens annähernd konstant ist.

10. Vorrichtung nach einem der Ansprüche 5 bis 7, **dadurch gekennzeichnet, dass** das weitere Schaltelement (11) über einen mit einer zusätzlichen Steuerkurve (28) in Wirkverbindung bringbaren Koppelelementbereich (29) betätigbar ist, wobei eine am weiteren Schaltelement (11) anlegbare Betätigungskraft aus einer Antriebskraft der Antriebseinrichtung (2) und der über die Einrichtung (6) in die Betätigungskette (25) zwischen dem weiteren Schaltelement (11) und der Antriebseinrichtung (2) einleitbaren Kraft resultiert.

11. Vorrichtung nach einem der Ansprüche 1 bis 10, **dadurch gekennzeichnet, dass** die Antriebswandlereinrichtung (3) als ein Kugel-Rampe-System ausgebildet ist und die Steuerkurve (9) und/oder die weitere Steuerkurve und/oder die zusätzliche Steuerkurve im Bereich einer Kurvenscheibe des Kugel-Rampe-Systems vorgesehen ist.

12. Vorrichtung nach einem der Ansprüche 1 bis 11, **dadurch gekennzeichnet, dass** die Steuerkurve (9) und/oder die weitere Steuerkurve (38) und/oder die zusätzliche Steuerkurve (28) in Abhängigkeit des Antriebes der Antriebseinrichtung (2) drehbar ausgeführt ist und der Koppelbereich (8) und/oder der Koppelelementbereich (29) gehäusefest ausgeführt ist.

13. Vorrichtung nach einem der Ansprüche 1 bis 11, **dadurch gekennzeichnet, dass** die Steuerkurve und/oder die weitere Steuerkurve und/oder die zusätzliche Steuerkurve gehäusefest ausgeführt ist und der Koppelbereich und/oder der Koppelelementbereich in Abhängigkeit des Antriebes der Antriebseinrichtung drehbar ausgeführt ist.

## Claims

1. Apparatus (1, 15) for changing an operating state of at least one shifting element (24, 11, 12) with two shifting element halves which can be brought into operative connection with one another in order to connect at least two components, or can be disengaged in order to disconnect the connection between the components, and a device (6) being provided, via which a force can be introduced into an actuating chain (10, 25) between a drive device (2, 16), by means of which an actuating force for the shifting element (24, 11, 12) can be provided, and the shifting element (24, 11, 12), and the force of the device (6) can be introduced into the actuating chain (10, 25) between the drive device (2) and the shifting element (24, 11, 12) in the region of a coupling region (8) of the device (6), which coupling region (8) is operatively connected to a control cam (9), the coupling region (8) being operatively connected to the control cam (9) in a manner which is dependent on a rotational drive of the drive device (2) along a course of the control cam (9), and the force which can be introduced via the device (6) varying in a manner which is dependent on the operating state, and in a manner which is at least dependent on the course of the control cam (9), and in that the rotational drive of the drive device (2) can be converted in the region of a drive converter device (3) into a translational actuating movement of the shifting element (24), **characterized in that** the drive converter device (3) has two assemblies (4) which are operatively connected to one another, one of the assemblies being configured so as to be rotatable and adjustable in the axial direction and being connected to the drive device, whereas the other assembly is fixed in the axial direction and rotationally locked, and it being possible for the axial actuating movement for the shifting element in the region of the rotatable assembly to be provided in a manner which is dependent on the rotation of the rotatable assembly.

2. Apparatus according to Claim 1, **characterized in that** the course of the control cam (9) has a region, in which the force which is provided via the device (6) acts in an additive manner with respect to an actuating force which is provided via the drive device (2) in the closing direction of the shifting element (24) counter to an actuating direction.

3. Apparatus according to Claim 1 or 2, **characterized in that** the course of the control cam (9) has a region (39), in which the force which is provided via the device (6) counteracts an actuating force which is provided via the drive device (2) in or counter to the actuating direction or in the opening direction of the shifting element (24).

4. Apparatus according to one of Claims 1 to 3, **characterized in that** the course of the control cam (9) has a region (41), in which the force which is provided via the device (6) both acts additively with respect to an actuating force which is provided via the drive device (2) in the actuating direction of the shifting element (24) and counteracts an actuating force which acts in the region of the shifting element (24) counter to the actuating direction of the shifting element.

5. Apparatus according to one of Claims 1 to 4, **characterized in that** a further shifting element (11) can be actuated via the drive device (2), it being possible for the force to be introduced into an actuating chain (25) between the drive device (2) and the further shifting element (11) via the coupling region (8) of the device (6) in the region of a further control cam (38).

6. Apparatus according to Claim 5, **characterized in that** the coupling region (8) is operatively connected to the further control cam (38) in a manner which is dependent on the rotational drive of the drive device (2) along the course of the further control cam (38), and varies the force which can be introduced via the device (6) in a manner which is dependent on the operating state, and in a manner which is at least dependent on the course of the further control cam (38) .

7. Apparatus according to Claim 5 or 6, **characterized in that** the course of the further control cam (38) adjoins the course of the control cam (9), and a holding region (39) is provided between the control cams (9, 38), in which holding region (39) the coupling region (8) is held below a defined actuating force of the drive device (2) for the shifting element (24) or the further shifting element (11), and a drive device-side actuation of the shifting elements (24, 11) does not take place.

8. Apparatus according to Claim 1, **characterized in that** the drive converter device (3) has two assemblies (22) which are operatively connected to one another, one of the assemblies (22) being of rotatable configuration and being connected to the drive device (3), whereas the other assembly is configured such that it can be adjusted in the axial direction and is rotationally locked, and provides the axial actuating movement for the shifting element (24) in a manner which is dependent on the rotation of the rotatable assembly (22).

9. Apparatus according to one of Claims 5 to 7, **characterized in that** a course of the control cam (9) and/or the further control cam (38) is adapted in a manner which is dependent on a course, which is set during an actuation of the shifting element (24) and/or the further shifting element (11), of a force which acts counter to the actuating direction of the shifting element (24) and/or the further shifting element (11), in such a way that an actuating force which is to be provided by the drive device (2) is preferably at least approximately constant in a predefined operating range of the shifting element (24) and/or the further shifting element (11).

10. Apparatus according to one of Claims 5 to 7, **characterized in that** the further shifting element (11) can be actuated via a coupling element region (29) which can be operatively connected to an additional control cam (28), an actuating force which can be applied on the further shifting element (11) resulting from a drive force of the drive device (2) and the force which can be introduced via the device (6) into the actuating chain (25) between the further shifting element (11) and the drive device (2).

11. Apparatus according to one of Claims 1 to 10, **characterized in that** the drive converter device (3) is configured as a ball ramp system, and the control cam (9) and/or the further control cam and/or the additional control cam are/is provided in the region of a cam disc of the ball ramp system.

12. Apparatus according to one of Claims 1 to 11, **characterized in that** the control cam (9) and/or the further control cam (38) and/or the additional control cam (28) are/is of rotatable configuration in a manner which is dependent on the drive of the drive device (2), and the coupling region (8) and/or the coupling element region (29) are/is configured so as to be fixed to the housing.

13. Apparatus according to one of Claims 1 to 11, **characterized in that** the control cam and/or the further control cam and/or the additional control cam are/is configured so as to be fixed to the housing, and the coupling region and/or the coupling element region are/is of rotatable configuration in a manner which is dependent on the drive of the drive device.

## Revendications

1. Ensemble (1, 15) servant à modifier l'état de fonctionnement d'au moins un élément (24, 11, 12) de changement de rapport de transmission qui présente deux moitiés d'élément de changement de rapport de transmission qui peuvent être amenés à coopérer pour relier mutuellement au moins deux composants ou pour désengager la liaison entre les composants,
un dispositif (6) par lequel une force peut être appliquée dans une chaîne d'actionnement (10, 25) entre un dispositif d'entraînement (2, 16) au moyen duquel une force d'actionnement peut être appliquée sur l'élément (24, 11, 12) de changement de rapport de transmission et l'élément (24, 11, 12) de changement de rapport de transmission étant prévu,
la force du dispositif (6) pouvant être appliquée au niveau d'une partie d'accouplement (8) coopérant avec une courbe de commande (9) du dispositif (6) située dans la chaîne d'actionnement (10, 25) entre le dispositif d'entraînement (2) et l'élément (24, 11, 12) de changement de rapport de transmission,
la partie d'accouplement (8) coopérant avec la courbe de commande (9) en fonction d'un entraînement en rotation du dispositif d'entraînement (2) le long de la courbe de commande (9) et la force qui peut être appliquée par l'intermédiaire du dispositif (6) variant en fonction de l'état de fonctionnement et au moins en fonction de la courbe de commande (9),
l'entraînement en rotation du dispositif d'entraînement (2) pouvant être converti au niveau d'un dispositif (3) de conversion d'entraînement en un déplacement de translation d'actionnement de l'élément (24) de changement de rapport de transmission, **caractérisé en ce que**
le dispositif (3) de conversion d'entraînement présente deux modules (4) qui coopèrent l'un avec l'autre,
**en ce que** l'un des modules est apte à tourner et à se déplacer dans la direction axiale et est relié au dispositif d'entraînement tandis que l'autre module est fixe dans la direction axiale et immobile en rotation et
**en ce que** le déplacement axial d'actionnement peut être appliqué au niveau du module rotatif sur l'élément de changement de rapport de transmission en fonction de la rotation du module rotatif.

2. Ensemble selon la revendication 1, **caractérisé en ce que** la courbe de commande (9) présente une partie dans laquelle la force délivrée par l'intermédiaire du dispositif (6) agit dans le sens de la fermeture de l'élément (24) de changement de rapport de transmission une direction d'actionnement en s'additionnant à la force d'actionnement délivrée par l'intermédiaire du dispositif d'entraînement (2).

3. Ensemble selon les revendications 1 ou 2, **caractérisé en ce que** la courbe de commande (9) présente une partie (39) dans laquelle la force délivrée par le dispositif (6) s'oppose à une force d'actionnement, appliquée par l'intermédiaire du dispositif d'entraînement (2) dans la direction d'actionnement, dans la direction opposée ou dans la direction d'ouverture de l'élément (24) de changement de rapport de transmission.

4. Ensemble selon l'une des revendications 1 à 3, **caractérisé en ce que** la courbe de commande (9) présente une partie (41) dans laquelle la force délivrée par l'intermédiaire du dispositif (6) agit à la fois en s'additionnant à la force d'actionnement délivrée par l'intermédiaire du dispositif d'entraînement (2) et dirigée dans la direction d'actionnement de l'élément (24) de changement de rapport de transmission et en opposition à une force d'actionnement qui agit au niveau de l'élément (24) de changement de rapport de transmission en opposition à la direction d'actionnement de l'élément de changement de rapport de transmission.

5. Ensemble selon l'une des revendications 1 à 4, **caractérisé en ce qu'**un autre élément de changement de rapport de transmission (11) peut être actionné par l'intermédiaire du dispositif d'entraînement (2), la force pouvant être appliquée dans une chaîne d'actionnement (25) qui s'étend entre le dispositif d'entraînement (2) et l'autre élément de changement de rapport de transmission (11) au niveau d'une autre courbe de commande (38), par l'intermédiaire de la partie d'accouplement (8) du dispositif (6).

6. Ensemble selon la revendication 5, **caractérisé en ce que** la partie d'accouplement (8) coopère avec l'autre courbe de commande (38) en fonction de l'entraînement en rotation du dispositif d'entraînement (2) le long de l'autre courbe de commande (38) et **en ce que** la force appliquée par l'intermédiaire du dispositif (6) varie en fonction de l'état de fonctionnement et au moins en fonction de l'autre courbe de commande (38).

7. Ensemble selon les revendications 5 ou 6, **caractérisé en ce que** l'autre courbe de commande (38) est située à la suite de la courbe de commande (9) et **en ce qu'**une partie de maintien (39) dans laquelle la partie d'accouplement (8) est maintenue en dessous d'une force d'actionnement définie appliquée par le dispositif d'entraînement (2) sur l'élément (24) de changement de rapport de transmission ou sur l'autre élément (11) de changement de rapport de transmission, et qui empêche un actionnement des éléments (24, 11) de changement de rapport de transmission par le dispositif d'entraînement, est prévue entre les courbes de commande (9, 38).

8. Ensemble selon la revendication 1, **caractérisé en ce que** le dispositif (3) de conversion d'entraînement présente deux modules (22) qui coopèrent l'un avec l'autre, l'un des modules (22) pouvant tourner et étant raccordé au dispositif d'entraînement (3) tandis que l'autre module peut être déplacé dans la direction axiale et ne peut tourner, le déplacement axial d'actionnement de l'élément (24) de changement de rapport de transmission dépendant de la rotation du module rotatif (22).

9. Ensemble selon l'une des revendications 5 à 7, **caractérisé en ce que** la courbe de commande (9) et/ou l'autre courbe de commande (38) sont adaptées en fonction d'une évolution, qui s'établit pendant l'actionnement de l'élément de changement de rapport de transmission (24) et/ou de l'autre élément de changement de rapport de transmission (11), d'une force qui agit en opposition à la direction d'actionnement de l'élément (24) de changement de rapport de transmission et/ou de l'autre élément (11) de changement de rapport de transmission, de telle sorte que la force appliquée par le dispositif d'entraînement (2) soit au moins approximativement constante, de préférence au moins dans une plage de fonctionnement prédéfinie de l'élément (24) de changement de rapport de transmission et/ou de l'autre élément (11) de changement de rapport de transmission.

10. Ensemble selon l'une des revendications 5 à 7, **caractérisé en ce que** l'autre élément (11) de changement de rapport de transmission peut être actionné par l'intermédiaire d'une partie (29) d'élément d'accouplement qui peut être amenée à coopérer avec une courbe de commande (28) supplémentaire, la force d'actionnement pouvant être appliquée sur l'autre élément (11) de changement de rapport de transmission résultant d'une force d'entraînement du dispositif d'entraînement (2) et de la force qui peut être appliquée par le dispositif (6) dans la chaîne d'actionnement (25) entre l'autre élément (11) de changement de rapport de transmission et le dispositif d'entraînement (2).

11. Ensemble selon l'une des revendications 1 à 10, **caractérisé en ce que** le dispositif (3) de conversion d'entraînement est configuré comme système à bille et à rampe et **en ce que** la courbe de commande (9), l'autre courbe de commande et/ou la courbe de commande supplémentaire sont prévues dans une partie d'une came du système à bille et à rampe.

12. Ensemble selon l'une des revendications 1 à 11, **caractérisé en ce que** la courbe de commande (9), l'autre courbe de commande (38) et/ou la courbe de commande supplémentaire (28) sont réalisées de manière à tourner en fonction de l'entraînement du dispositif d'entraînement (2) et **en ce que** la partie d'accouplement (8) et/ou la partie (29) d'élément d'accouplement sont solidaires du carter.

13. Ensemble selon l'une des revendications 1 à 11, **caractérisé en ce que** la courbe de commande, l'autre courbe de commande et/ou la courbe de commande supplémentaire sont solidaires du carter et **en ce que** la partie d'accouplement et/ou la partie d'élément d'accouplement peuvent tourner en fonction de l'entraînement du dispositif d'entraînement.
